(19) Europäisches Patentamt
European Patent Office
Office européen des brevets

(11) **EP 4 253 758 A1**

(12) **EUROPEAN PATENT APPLICATION**
published in accordance with Art. 153(4) EPC

(43) Date of publication:
**04.10.2023 Bulletin 2023/40**

(21) Application number: **20963592.9**

(22) Date of filing: **30.11.2020**

(51) International Patent Classification (IPC):
*F04C 29/02* (2006.01)       *F04B 39/00* (2006.01)
*F04C 29/00* (2006.01)       *H02K 1/32* (2006.01)

(52) Cooperative Patent Classification (CPC):
**F04B 39/00; F04C 29/00; F04C 29/02; H02K 1/32**

(86) International application number:
**PCT/JP2020/044447**

(87) International publication number:
**WO 2022/113328 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **BABA, Kazuhiko
Tokyo 100-8310 (JP)**

(74) Representative: **Pfenning, Meinig & Partner mbB
Patent- und Rechtsanwälte
Theresienhöhe 11a
80339 München (DE)**

(54) **COMPRESSOR, REFRIGERATION CYCLE DEVICE, AND AIR CONDITIONER**

(57) A compressor (100) includes: a compression mechanism (1) to compress a refrigerant (110); an electric motor (2) to drive the compression mechanism (1); and a container (4) to contain the compression mechanism (1), the electric motor (2), the refrigerant (110), and the lubricating oil (40). A rotor (10) of the electric motor (2) includes: a rotor core (11) including a plurality of steel sheets (13) laminated with a first gap (D) in between; and a first permanent magnet (12a) inserted in a magnet in-
sertion hole (11b) of the rotor core (11). The rotor core (11) includes: a flow channel (15) which is located inward from the magnet insertion hole (11b) in a radial direction of the rotor core (11) and through which the refrigerant (110) and the lubricating oil (40) flow; and a first guide part (16) to guide the lubricating oil (40) flowing through the flow channel (15) to the first gap (D) when the rotor (10) rotates.

FIG. 4

**Description**

TECHNICAL FIELD

The present disclosure relates to a compressor, a refrigeration cycle device, and an air conditioner.

BACKGROUND ART

A compressor including a compression mechanism that compresses a refrigerant, an electric motor that drives the compression mechanism, and a container containing the compression mechanism, the electric motor, the refrigerant, and lubricating oil has become widespread. See, for example, Patent Literature 1. Patent Literature 1 describes that a rotor core of a rotor of an electric motor includes a plurality of electromagnetic steel sheets laminated with a gap in between, and the rotor core has an opening (hereinafter referred to as an "air opening") serving as a flow channel in which a refrigerant and lubricating oil flow.

PRIOR ART REFERENCE

PATENT REFERENCE

Patent Reference 1: International Patent Publication No. 2017/072967 (see, for example, paragraphs 0139, 0140, and 0142, FIGS. 2 through 5, 8, 26, and 27)

SUMMARY OF THE INVENTION

PROBLEM TO BE SOLVED BY THE INVENTION

However, in the case of increasing the flow rate of a refrigerant flowing in the air opening in order to increase the flow rate of the refrigerant discharged from the compressor (hereinafter referred to as a "stroke volume"), the flow velocity of the refrigerant in the air opening increases. In this case, the refrigerant and lubricating oil are not easily separated, and thus, the lubricating oil does not easily flow in the gap between the plurality of electromagnetic steel sheets and tends to be discharged to the outside of the compressor. Accordingly, there arises a problem of poor lubrication due to a shortage of lubricating oil for lubricating a compression mechanism in a compressor.

It is therefore an object of the present disclosure to prevent poor lubrication in a compressor.

MEANS OF SOLVING THE PROBLEM

A compressor according to an aspect of the present disclosure includes: a compression mechanism to compress a refrigerant; an electric motor to drive the compression mechanism; and a container to contain the compression mechanism, the electric motor, the refrigerant, and lubricating oil, wherein a rotor of the electric motor includes: a rotor core including a plurality of steel sheets laminated with a first gap in between; and a first permanent magnet inserted in a magnet insertion hole of the rotor core, the rotor core includes: a flow channel which is located inward from the magnet insertion hole in a radial direction of the rotor core and through which the refrigerant and the lubricating oil flow; and a first guide part to guide the lubricating oil flowing through the flow channel to the first gap when the rotor rotates.

EFFECTS OF THE INVENTION

According to the present disclosure, poor lubrication in the compressor can be prevented.

BRIEF DESCRIPTION OF THE DRAWINGS

FIG. 1 is a cross-sectional view illustrating a configuration of a compressor according to a first embodiment.
FIG. 2 is a cross-sectional view illustrating a configuration of a compression mechanism shown in FIG. 1.
FIG. 3 is a cross-sectional view illustrating a configuration of an electric motor shown in FIG. 1.
FIG. 4 is a cross-sectional view illustrating a configuration of a rotor according to the first embodiment.
FIG. 5 is a cross-sectional view illustrating a portion of the configuration of the rotor shown in FIG. 3.
FIG. 6A is an enlarged cross-sectional view illustrating a portion of the configuration of the rotor shown in FIG. 5. FIG. 6B is a cross-sectional view of a portion of the rotor shown in FIG. 6A taken along line B6-B6.
FIG. 7A is a plan view illustrating a configuration of an upper end plate shown in FIG. 1. FIG. 7B is a plan view illustrating a configuration of a lower end plate shown in FIG. 1.
FIG. 8 is a cross-sectional view illustrating a configuration of a rotor of an electric motor of a compressor according to a first variation of the first embodiment.
FIG. 9 is a cross-sectional view illustrating a configuration of a rotor of an electric motor of a compressor according to a second variation of the first embodiment.
FIG. 10 is a cross-sectional view illustrating a configuration of a rotor of an electric motor of a compressor according to a second embodiment.
FIG. 11 is a cross-sectional view illustrating a configuration of a rotor of an electric motor of a compressor according to a first variation of the second embodiment.
FIG. 12 is a diagram illustrating a configuration of a refrigerant circuit in cooling operation of an air conditioner according to a third embodiment.
FIG. 13 is a diagram illustrating the configuration of the refrigerant circuit in heating operation of the air conditioner according to the third embodiment.

## MODE FOR CARRYING OUT THE INVENTION

A compressor, a refrigeration cycle device, and an air conditioner according to an embodiment of the present disclosure will be described with reference to the drawings. The following embodiments are merely examples, and the embodiments may be combined as appropriate and each embodiment may be changed as appropriate.

The type of "refrigerant" herein will be described using a refrigerant number beginning with "R" specified by the International Standard ISO 817.

## FIRST EMBODIMENT

<Compressor Configuration>

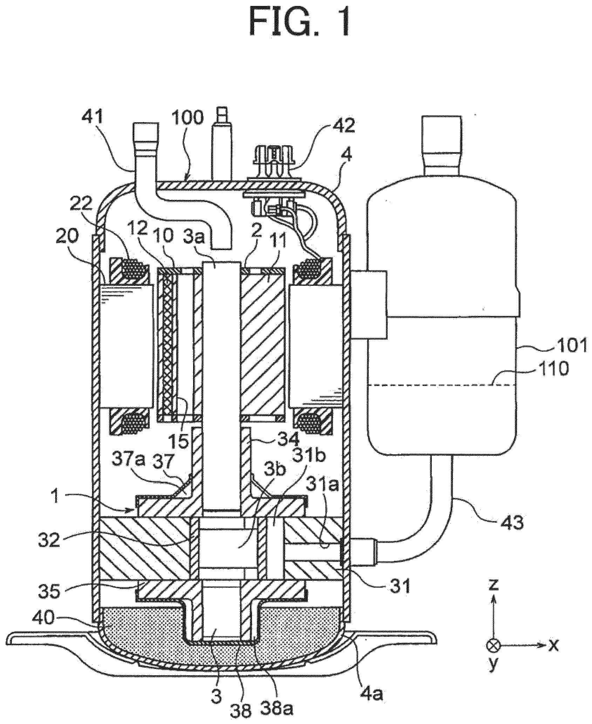

FIG. 1 is a cross-sectional view illustrating a configuration of a compressor 100 according to a first embodiment. The compressor 100 is, for example, a rotary compressor. The compressor 100 is not limited to a rotary compressor, and may be another compressor such as a low-pressure compressor or a scroll compressor.

As illustrated in FIG. 1, the compressor 100 includes a compression mechanism 1, an electric motor 2, a crankshaft 3 as a rotation shaft, and a sealed container 4 as a container.

The compression mechanism 1 sucks a refrigerant 110 from an accumulator 101 and compresses the refrigerant 110. The electric motor 2 drives the compression mechanism 1. The electric motor 2 is disposed on a downstream side with respect to the compression mechanism 1 in a direction in which the refrigerant 110 flows. In the example illustrated in FIG. 1, the refrigerant 110 flows from a -z-axis side to a +z-axis side. Specifically, a downstream side in the direction in which the refrigerant 110 flows is the +z-axis side, and an upstream side in the direction in which the refrigerant 110 flows is the -z-axis side.

The refrigerant 110 includes ethylene-based fluorocarbon having a double bond of carbon. That is, the refrigerant 110 is a hydro fluoro olefin (HFO) refrigerant. Accordingly, since the refrigerant 110 includes ethylene-based fluorocarbon, a working pressure of the compressor 100 can be reduced. A global warming potential (GWP) of the refrigerant 110 is lower than a GWP of a hydro fluoro carbon (HFC) refrigerant. Thus, the greenhouse effect of the refrigerant 110 is smaller than the greenhouse effect of the HFC refrigerant. In addition, since the refrigerant 110 includes ethylene-based fluorocarbon, disproportionation of the refrigerant 110 can be prevented.

In the first embodiment, the refrigerant 110 is a refrigerant mixture in which ethylene-based fluorocarbon is mixed with another refrigerant. The refrigerant 110 includes R1123 (i.e., 1,1,2-trifluoroethylene) as ethylene-based fluorocarbon. The proportion of R1123 in the refrigerant 110 is preferably within the range from 40wt% to 60wt%, for example.

The refrigerant 110 includes R32 (difluoromethane) as another refrigerant, for example. That is, in the first embodiment, the refrigerant 110 is a refrigerant mixture in which R1123 and R32 are mixed. R1123 is not limited to R32, and R1123 may be mixed with one or more refrigerants of R1234yf (i.e., 2,3,3,3-tetrafluoropropene), R1234ze(E) (i.e., trans-1,3,3,3-tetrafluoropropene), R1234ze(Z) (i.e., sis-1,3,3,3-tetrafluoropropene), R125 (1,1,1,2-pentafluoroethane), and R134a (i.e., 1,1,1,2-tetrafluoroethane).

The refrigerant 110 may include two or more types of ethylene-based fluorocarbon. For example, the refrigerant 110 may include R1123 and another ethylene-based fluorocarbon. For example, the refrigerant 110 may include one or more types of ethylene-based fluorocarbon of R1141 (i.e., fluoroethylene), R1132a (i.e., 1,1-diuoroethylene), R1132(E) (i.e., trans-1,2-difluoroethylene), and R1132(Z) (i.e., sis-1,2-difluoroethylene), as another ethylene-based fluorocarbon. The refrigerant 110 may include R290 (i.e., propane) composed of hydrocarbon, as well as ethylene-based fluorocarbon. That is, the refrigerant 110 may be a hydro carbon (HC) refrigerant.

The crankshaft 3 couples the compression mechanism 1 and the electric motor 2 to each other. The crankshaft 3 includes a shaft body part 3a fixed to a rotor 10 of the electric motor 2 and an eccentric shaft part 3b fixed to a rolling piston 32 of the compression mechanism 1.

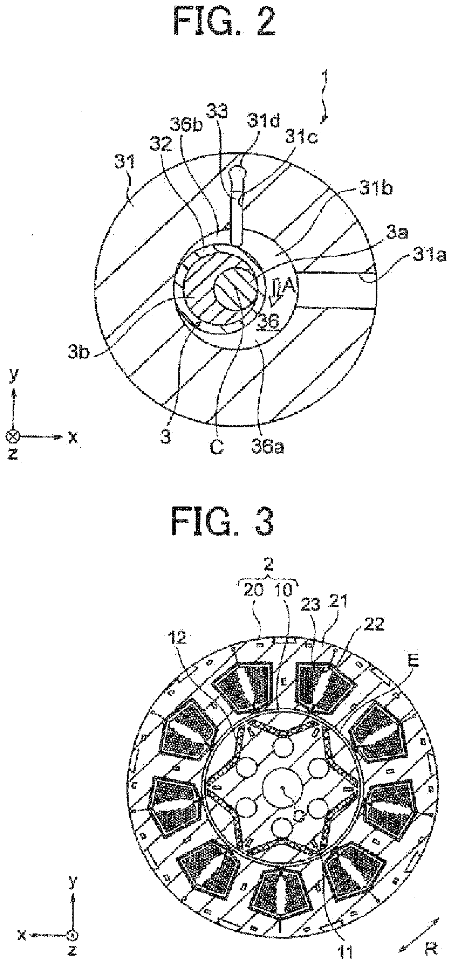

In the following description, a direction along a circumference of a circle about the crankshaft 3 will be referred to as a "circumferential direction," a direction in which an axis (axis C shown in FIG. 2 described later) as a rotation center of the crankshaft 3 will be referred to as an "axial direction," and a direction in which a line orthogonal to the axial direction and passing through the crankshaft 3 will be referred to as a "radial direction." In some drawings, an xyz orthogonal coordinate system is shown in order to facilitate understanding of relationship among the drawings. The z axis is a coordinate axis parallel to the axis of the crankshaft 3. The y axis is a coordinate axis orthogonal to the z axis. The x axis is a coordinate axis orthogonal to both the y axis and the z axis.

The sealed container 4 is a substantially cylindrical container, and contains the compression mechanism 1, the electric motor 2, the refrigerant 110, and refrigerating machine oil 40. The refrigerating machine oil 40 is lubricating oil for lubricating the compression mechanism 1, and is stored in a bottom portion 4a of the sealed container 4. That is, the bottom portion 4a of the sealed container 4 is an oil sump in which the refrigerating machine oil 40 is stored. The refrigerating machine oil 40 lubricates a sliding part of the compression mechanism 1 (e.g., a fitting part between the rolling piston 32 and the eccentric shaft part 3b of the crankshaft 3 shown in FIG.

2 described later). The refrigerating machine oil 40 flows through an oil supply passage (not shown) formed in the crankshaft 3 and lubricates the sliding part of the compression mechanism 1.

The compressor 100 further includes a discharge pipe 41 and a terminal 42 attached to an upper portion of the sealed container 4. The discharge pipe 41 is connected to a refrigerant flow channel of the refrigeration cycle device. The discharge pipe 41 discharges the refrigerant 110 compressed by the compression mechanism 1 to the outside of the sealed container 4. The terminal 42 is connected to a driving device (not shown) disposed outside the compressor 100. The terminal 42 supplies a driving current to a coil 22 of a stator 20 of the electric motor 2 through a lead wire 44. Accordingly, magnetic flux flows in the coil 22 and consequently the rotor 10 rotates.

<Configuration of Compression Mechanism>

FIG. 2 is a cross-sectional view illustrating a configuration of the compression mechanism 1 shown in FIG. 1. As illustrated in FIGS. 1 and 2, the compression mechanism 1 includes a cylinder 31, the rolling piston 32, a vane 33, an upper bearing 34, and a lower bearing 35. The cylinder 31 includes a suction port 31a, a cylinder chamber 31b, and a vane groove 31c.

The suction port 31a is connected to the accumulator 101 through a suction pipe 43. The suction port 31a is a passage in which the refrigerant 110 sucked from the accumulator 101 flows, and communicates with the cylinder chamber 31b.

The cylinder chamber 31b is cylindrical space about the axis C. The cylinder chamber 31b houses the eccentric shaft part 3b of the crankshaft 3, the rolling piston 32, and the vane 33. The rolling piston 32 has a ring shape. The rolling piston 32 is fixed to the eccentric shaft part 3b of the crankshaft 3.

The vane groove 31c communicates with the cylinder chamber 31b. The vane 33 is attached to the vane groove 31c. A back-pressure chamber 31d is provided in an end portion of the vane groove 31c. The vane 33 is pressed by a spring (not shown) disposed in the back-pressure chamber 31d toward the axis C to be thereby brought into contact with an outer peripheral surface of the rolling piston 32. Accordingly, the vane 33 divides space 36 surrounded by an inner peripheral surface of the cylinder chamber 31b, the outer peripheral surface of the rolling piston 32, the upper bearing 34, and the lower bearing 35 into a suction-side working chamber (hereinafter referred to as a "suction chamber") 36a and a compression-side working chamber (hereinafter referred to as a "compression chamber") 36b. The suction chamber 36a communicates with the suction port 31a.

While the rolling piston 32 eccentrically rotates, the vane 33 reciprocates in the y-axis direction in the vane groove 31c. The vane 33 has a plate shape, for example. In the example illustrated in FIG. 2, the rolling piston 32 and the vane 33 are separate components, but the rolling piston 32 may be integrated with the vane 33.

As illustrated in FIG. 1, the upper bearing 34 closes an end portion of the cylinder chamber 31b on the +z-axis side. The lower bearing 35 closes an end portion of the cylinder chamber 31b on the -z-axis side. The upper bearing 34 and the lower bearing 35 are fixed to the cylinder 31 by fastening members (e.g., bolts).

Each of the upper bearing 34 and the lower bearing 35 has a discharge port from which the compressed refrigerant 110 (see FIG. 1) is discharged to the outside of the cylinder chamber 31b. The discharge port of each of the upper bearing 34 and the lower bearing 35 communicates with the compression chamber 36b of the cylinder chamber 31b. The discharge port is provided with a discharge valve (not shown). When the pressure of the refrigerant 110 compressed in the compression chamber 36b increases to a predetermined pressure or more, the discharge valve opens and allows the high-temperature and high-pressure refrigerant 110 to be discharged to inner space of the sealed container 4. The lower bearing 35 may not have a discharge port.

An upper discharge muffler 37 is attached to the upper bearing 34 with a fastening member (e.g., a bolt). A muffler chamber 37a is disposed between the upper bearing 34 and the upper discharge muffler 37. Accordingly, the refrigerant 110 discharged from the discharge port of the upper bearing 34 is diffused in the muffler chamber 37a, and thus, occurrence of discharge noise of the refrigerant 110 discharged from the discharge port of the upper bearing 34 can be suppressed.

A lower discharge muffler 38 is attached to the lower bearing 35 with a fastening member (e.g., a bolt). A muffler chamber 38a is disposed between the lower bearing 35 and the lower discharge muffler 38. Accordingly, the refrigerant 110 discharged from the discharge port of the lower bearing 35 is diffused in the muffler chamber 38a, and thus, occurrence of discharge noise of the refrigerant 110 discharged from the lower bearing 35 can be suppressed. In a case where only one of the upper bearing 34 or the lower bearing 35 has a discharge port, a discharge muffler may be attached to the bearing having the discharge port.

<Operation of Compressor>

Next, operation of the compressor 100 will be described with reference to FIGS. 1 and 2. A driving current is supplied from the terminal 42 to the electric motor 2 and consequently the rotor 10 of the electric motor 2 rotates. With the rotation of the rotor 10, the crankshaft 3 rotates accordingly. While the crankshaft 3 rotates, the rolling piston 32 and the eccentric shaft part 3b rotate about an axis eccentric from the axis C in a direction indicated by arrow A in FIG. 2. Accordingly, the low-pressure refrigerant 110 is sucked into the suction chamber 36a.

The refrigerant 110 sucked in the suction chamber 36a is compressed by rotation of the rolling piston 32. Specifically, while the rolling piston 32 eccentrically rotates, the vane 33 reciprocates in the vane groove 31c to cause the refrigerant 110 sucked in the suction chamber 36a to move to the compression chamber 36b to be compressed. The refrigerant 110 compressed in the compression chamber 36b changes to a high-temperature and high-pressure refrigerant gas and is discharged from one of the upper discharge muffler 37 or the lower discharge muffler 38.

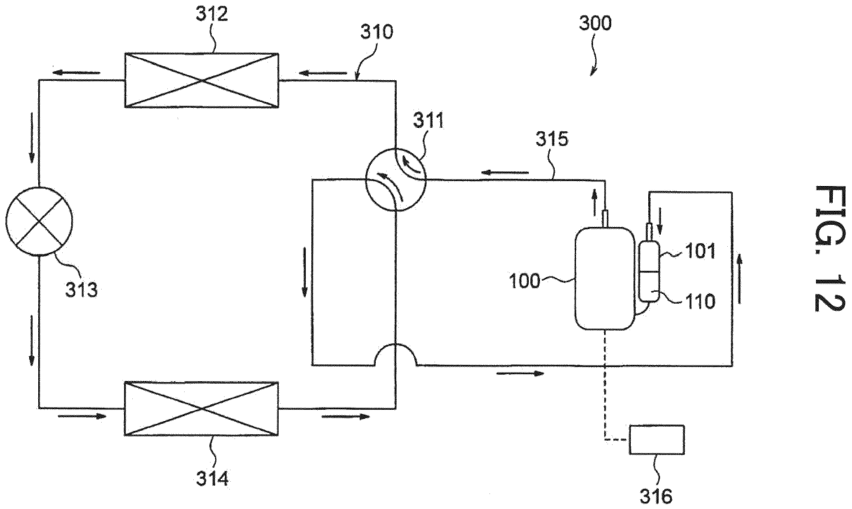

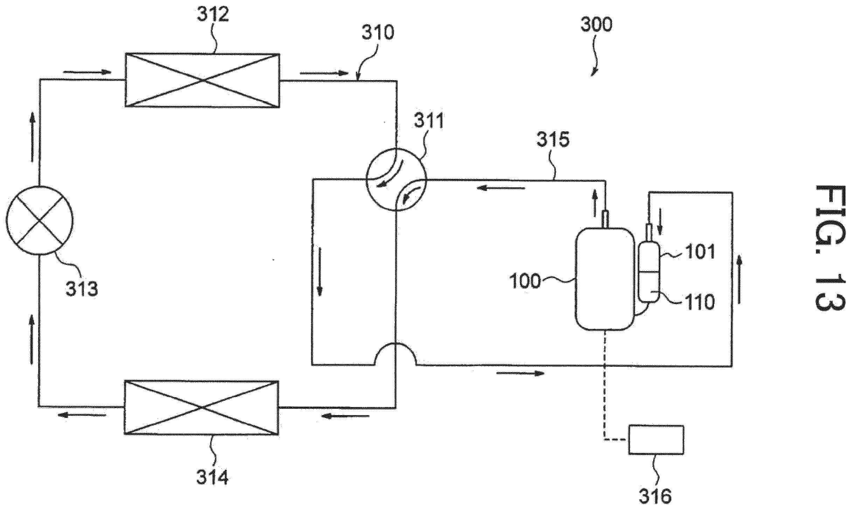

The refrigerating machine oil 40 is dissolved in the refrigerant 110 compressed by the compression mechanism 1. The refrigerating machine oil 40 flows in flow channel 15 (see FIG. 1) as an air opening formed in the rotor 10 of the electric motor 2, through the oil supply passage (not shown) formed in the crankshaft 3. At this time, the refrigerant 110 and the refrigerating machine oil 40 are separated in the flow channel 15 by a centrifugal force exerted during rotation of the rotor 10. Specifically, the refrigerating machine oil 40 having a larger specific gravity than the refrigerant 110 flows at the outer side in the radial direction in the flow channel 15, and the refrigerant 110 flows at the inner side in the radial direction in the flow channel 15 and consequently the refrigerant 110 and the refrigerating machine oil 40 are separated. The refrigerating machine oil 40 separated from the refrigerant 110 cools the rotor core 11 and a permanent magnet 12 of the rotor 10. On the other hand, the refrigerant 110 is discharged to the outside of the sealed container 4 through the discharge pipe 41, and flows in a refrigerant flow channel (e.g., refrigerant flow channel 310 shown in FIGS. 12 and 13 described later) of the refrigeration cycle device.

<Configuration of Electric Motor>

A configuration of the electric motor 2 according to the first embodiment will now be described. FIG. 3 is a cross-sectional view illustrating the configuration of the electric motor 2 according to the first embodiment. As illustrated in FIG. 3, the electric motor 2 includes the rotor 10 and the stator 20. The rotor 10 is disposed at the inner side of the stator 20. That is, the electric motor 2 according to the first embodiment is an inner-rotor electric motor. An air gap E is present between the rotor 10 and the stator 20. The air gap E is a gap defined within the range from 0.3 mm to 1.0 mm, for example.

<Stator Configuration>

A configuration of the stator 20 will now be described. As illustrated in FIG. 3, the stator 20 includes a stator core 21 and the coil 22 wound around the stator core 21. The stator core 21 is fixed to the sealed container 4 illustrated in FIG. 1. The stator core 21 is fixed to the inner wall of the sealed container 4 by a method such as press fitting, shrink fitting, or welding, for example. The coil 22 is wound around the stator core 21 with an insulator 23 interposed therebetween.

<Rotor Configuration>

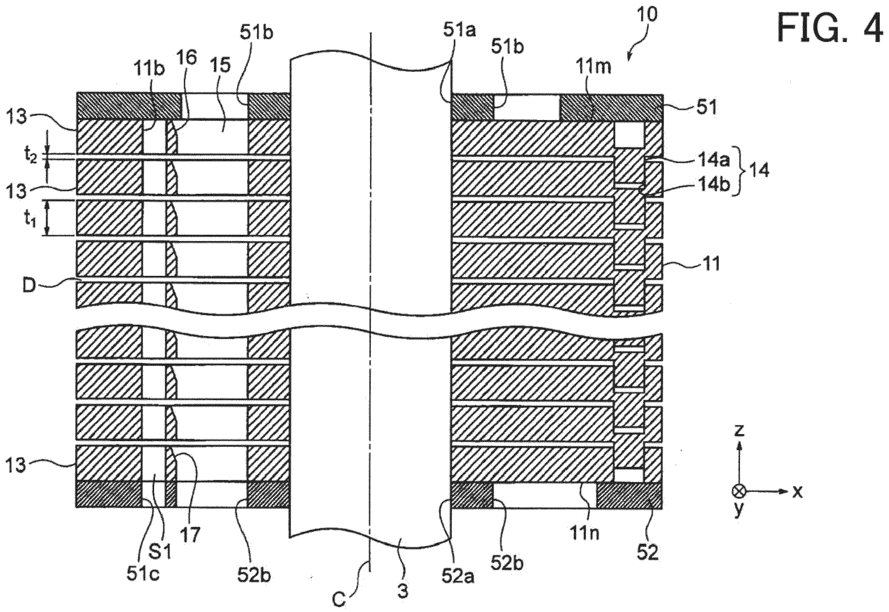

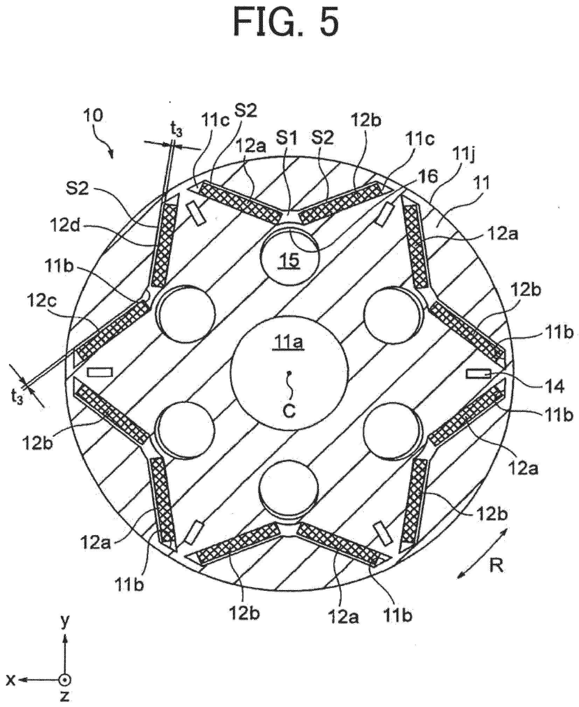

A configuration of the rotor 10 will now be described with reference to FIGS. 4 and 5. FIG. 4 is a cross-sectional view illustrating a configuration of the rotor 10 shown in FIG. 1. FIG. 5 is a cross-sectional view illustrating a portion of the configuration of the rotor 10 shown in FIG. 3. As illustrated in FIGS. 4 and 5, the rotor 10 includes a rotor core 11, a permanent magnet 12a as a first permanent magnet, and a permanent magnet 12b as a second permanent magnet. The permanent magnets 12a and 12b are inserted in magnet insertion holes 11b of the rotor core 11. In the following description, in a case where it is unnecessary to distinguish the permanent magnet 12a and the permanent magnet 12b, the permanent magnet 12a and the permanent magnet 12b will be collectively referred to as "permanent magnets 12." The permanent magnets 12 are omitted from FIG. 4.

As illustrated in FIG. 4, the rotor core 11 includes a plurality of electromagnetic steel sheets 13 as a plurality of steel sheets laminated in a z-axis direction. The plurality of electromagnetic steel sheets 13 are laminated with a gap D as a first gap in between. The rotor core 11 includes non-oriented electromagnetic steel sheets as the electromagnetic steel sheets 13. A thickness $t_1$ of each of the electromagnetic steel sheet 13 is a predetermined thickness within the range from 0.2 mm to 0.7 mm, for example. In the first embodiment, the thickness $t_1$ of each electromagnetic steel sheet 13 is, for example, 0.35 mm. The rotor core 11 may include other magnetic steel sheets, instead of the electromagnetic steel sheets 13.

The plurality of electromagnetic steel sheets 13 are fixed to one another by swaging, and thus the rotor core 11 is formed. Thus, the rotor core 11 includes a swaging portion 14. The swaging portion 14 includes a swaging projection 14a and a swaging recess 14b. The swaging projection 14a is a projection projecting toward another adjacent electromagnetic steel sheet 13. The swaging recess 14b is a recess in which the swaging projection 14a is fitted. The swaging projection 14a is fitted in the swaging recess 14b of another adjacent electromagnetic steel sheet 13 and consequently two adjacent electromagnetic steel sheets 13 are fastened. In the first embodiment, the swaging projection 14a is a V-shaped projection. Accordingly, as compared to a configuration in which the swaging projection is a cylindrical projection, a fastening force for fastening two adjacent electromagnetic steel sheets 13 is enhanced. The length of the swaging projection 14a in the z-axis direction is larger than the thickness $t_1$ of each electromagnetic steel sheet 13.

A spacing $t_2$ of the gap D is smaller than the thickness $t_1$ of each electromagnetic steel sheet 13. The spacing $t_2$ is, for example, equal to or less than 1/10 of the thickness $t_1$ of each electromagnetic steel sheet 13. In the first embodiment, the spacing $t_2$ is 10 $\mu$m or less.

Specifically, the spacing $t_2$ has a predetermined dimension within the range from 1 µm to 5 um. In the first embodiment, since the swaging projection 14a has the V-shaped projection as described above, dimensional accuracy of the spacing $t_2$ is sufficiently obtained as compared to the configuration in which the swaging projection is a cylindrical projection.

As illustrated in FIG. 5, the rotor core 11 includes a shaft insertion hole 11a as a shaft insertion hole and the plurality of magnet insertion holes 11b. The crankshaft 3 (see FIG. 4) is fixed to the shaft insertion hole 11a. The crankshaft 3 is fixed to the shaft insertion hole 11a by a method such as press fitting, shrink fitting, or welding, for example.

The plurality of magnet insertion holes 11b are spaced from one another in a circumferential direction R with a spacing. The shape of each magnet insertion hole 11b when seen in the z-axis direction is a V shape projecting radially inward. The shape of each magnet insertion hole 11b when seen in the z-axis direction may be an arc shape projecting radially inward or outward or a bathtub shape projecting radially outward. The shape of each magnet insertion hole 11b when seen in the z-axis direction may be a rectangle.

The permanent magnet 12a and the permanent magnet 12b are embedded in the magnet insertion holes 11b. Thus, the structure of the rotor 10 is an interior permanent magnet (IPM) structure. The permanent magnet 12a and the permanent magnet 12b are disposed with a gap S1 as a second gap in between in the magnet insertion holes 11b. In the first embodiment, the rotor core 11 has six magnet insertion holes 11b, for example. Accordingly, in the first embodiment, the number of poles of the electric motor 2 is six. The number of poles of the electric motor 2 is not limited to six, and only needs to be two or more.

In the first embodiment, the permanent magnet 12 is, for example, a plate-shaped magnet. The shape of the permanent magnet 12 when seen in the z-axis direction is a rectangle. The permanent magnet 12 is not limited to a plate-shaped magnet, and may be a magnet having a semicylindrical curved surface. The thickness of the permanent magnet 12 in the lateral direction is smaller than the thickness of each magnet insertion hole 11b in the lateral direction. Thus, a gap S2 as a third gap is present between the permanent magnet 12 and the magnet insertion hole 11b. The gap S2 has a predetermined dimension within the range from 0.1 mm to 0.2 mm, for example.

In the example illustrated in FIG. 5, the gap S2 is present between the magnet insertion hole 11b and a radially outward surface 12c of the permanent magnet 12a and between the magnet insertion hole 11b and a radially outward surface 12d of the permanent magnet 12b. That is, the gap S2 is located radially outward of the permanent magnets 12a and 12b. The gap S2 may be located radially inward of the permanent magnets 12a and 12b.

The permanent magnet 12 is, for example, a rare earth magnet. Specifically, the permanent magnet 12 is a rare earth magnet including neodymium (Nd), iron (Fe), and boron (B). In the first embodiment, the permanent magnet 12 may include none of dysprosium (Dy) and terbium (Tr). Dy and Tr are rare earth metals, and thus, expensive. In the first embodiment, the Dy content and the Tr content in the permanent magnets 12 are 0 wt.%, and thus, costs for the permanent magnets 12 can be reduced. The permanent magnets 12 may include less than 1.0 wt.% of Dy or less than 1.0 wt.% of Tr. The permanent magnets 12 may include both less than 1.0 wt.% of Dy and less than 1.0 wt.% of Tr. The permanent magnet 12 is not limited to a rare earth magnet, and may be another permanent magnet such as a ferrite magnet.

A flux barrier 11c is present between the magnet insertion hole 11b and the end portion of the permanent magnet 12 in the circumferential direction R. Since a portion between the flux barrier 11c and an outer periphery 11j of the rotor core 11 is a thin portion, leakage flux between adjacent magnetic poles are suppressed. The flux barrier 11c communicates with the gap S2. The refrigerant 110 and the refrigerating machine oil 40 (see FIG. 1) flow in the flux barrier 11c.

The rotor core 11 further includes the plurality of flow channels 15. The refrigerant 110 compressed by the compression mechanism 1 and the refrigerating machine oil 40 dissolved in the refrigerant 110 flow in each of the flow channels 15 of the plurality of flow channels 15. In the first embodiment, the rotor core 11 includes, for example, six flow channels 15. That is, in the first embodiment, the number of the flow channels 15 is equal to the number of the magnet insertion holes 11b. The number of the flow channels 15 may be different from the number of the magnet insertion holes 11b.

The flow channels 15 are formed radially inward of the magnet insertion holes 11b. In the first embodiment, the flow channels 15 are through holes penetrating the rotor core 11 in the z-axis direction. The opening of the flow channel 15 is, for example, circular. The opening of the flow channel 15 is not limited to a circular shape, and may have another shape such as an oval, or may have any shape formed by combining a curve and a straight line.

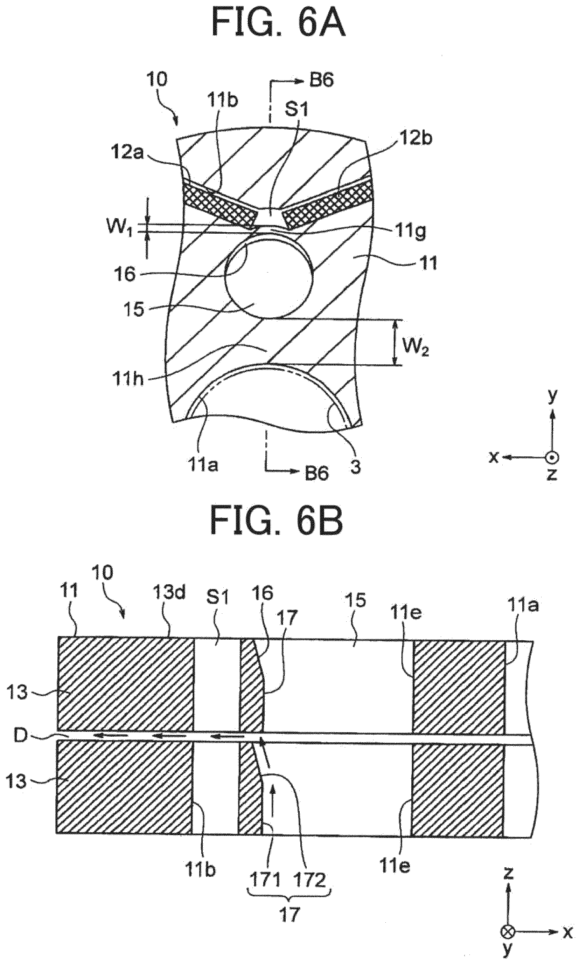

FIG. 6A is an enlarged cross-sectional view illustrating a portion of the configuration of the rotor 10 shown in FIG. 5. FIG. 6B is a cross-sectional view of a portion of the configuration of the rotor 10 shown in FIG. 6A taken along line B6-B6. As illustrated in FIGS. 6A and 6B, the rotor core 11 includes a guide part 16 as an oil introduction part for guiding the refrigerating machine oil 40 (see FIG. 1) to the gap D. Specifically, the guide part 16 has a guide structure for guiding the refrigerating machine oil 40 flowing in the flow channels 15 together with the refrigerant 110 to the gap D when the rotor 10 rotates.

For example, while the rotor 10 rotates, the refrigerating machine oil 40 flows along a path indicated by arrows in FIG. 6B. The refrigerating machine oil 40 guided in the gap D flows from the inside to the outside in the radial direction in the gap D under the influence of a centrifugal force. Accordingly, the refrigerating machine oil 40 flows in the gap S1 (see FIG. 5) in the magnet insertion hole 11b. The refrigerating machine oil 40 flows in the gap D and then flows toward the bottom portion 4a of the sealed container 4 (see FIG. 1) under the influence of the gravity.

In the manner described above, the refrigerating machine oil 40 flowing in the flow channels 15 is guided by the guide part 16 to the gap D and consequently the refrigerating machine oil 40 flows in the gap D and passes through the gap S1, and accordingly, the permanent magnets 12 are easily cooled. In addition, the refrigerating machine oil 40 that has flowed in the flow channels 15 can easily return to the bottom portion 4a of the sealed container 4 (see FIG. 1) through the gap D. Accordingly, the compression mechanism 1 is easily lubricated by the refrigerating machine oil 40, and thus poor lubrication in the compressor 100 can be prevented.

In a case where the refrigerant 110 is a refrigerant including ethylene-based fluorocarbon (R1123 in the first embodiment) described above, although a working pressure of the compressor 100 can be reduced, the flow rate of the refrigerant 110 discharged from the compressor 100 decreases disadvantageously. In this case, it is necessary to increase the flow rate of the refrigerant 110 flowing in the flow channels 15 by increasing the number of rotations of the rotor 10. However, in the case where the flow rate of the refrigerant 110 flowing in the flow channels 15 increases, the flow velocity of the refrigerant 110 increases, and thus, the refrigerating machine oil 40 is not easily separated from the refrigerant 110. In the first embodiment, since the rotor core 11 includes the guide part 16, even in the case where the refrigerant 110 includes ethylene-based fluorocarbon, the guide part 16 easily guides the refrigerating machine oil 40 to the gap D. Accordingly, the refrigerating machine oil 40 flowing in the flow channels 15 is easily separated from the refrigerant 110.

As illustrated in FIG. 6B, the guide part 16 is provided in the flow channel 15. The guide part 16 has a radially inward surface 17 defining the flow channel 15. The radially inward surface 17 includes a vertical portion 171 and a slope portion 172 as a first slope portion. The vertical portion 171 is a plane of the radially inward surface 17 extending in parallel with the z-axis direction.

The slope portion 172 is closer to the +z-axis side than the vertical portion 171. The slope portion 172 is a slope that inclines in a direction away from the axis C (see FIG. 4) of the rotor 10 as approaching an end surface 13d at the +z-axis side that is an end surface of the electromagnetic steel sheets 13 in the z-axis direction. The refrigerating machine oil 40 flows along the vertical portion 171 and the slope portion 172 in the flow channel 15 to be thereby guided to a portion of the gap D radially outside the flow channel 15 (i.e., in a direction toward the magnet insertion hole 11b). In the example illustrated in FIG. 6B, the slope portion 172 is a flat surface, but may be a curved surface.

Since the specific gravity of the refrigerating machine oil 40 is heavier than the specific gravity of the refrigerant 110, the refrigerating machine oil 40 easily flows at a radially outer side in the flow channel 15 by a centrifugal force exerted during rotation of the rotor 10. In the first embodiment, the guide part 16 includes the slope portion 172 in the radially inward surface 17 defining the flow channel 15. Thus, the refrigerating machine oil 40 flowing in the flow channel 15 is easily guided to the gap D through the slope portion 172.

The gap S1 faces the guide part 16 in the radial direction. Accordingly, the refrigerating machine oil 40 guided to the gap D by the guide part 16 easily flows in the gap S1. Thus, the permanent magnets 12a and 12b are easily cooled by the refrigerating machine oil 40.

Supposing the area of the opening of the flow channel 15 is A1 and the area of the gap S1 when seen in the z-axis direction is A2, the area A1 is larger than the area A2. In the first embodiment, the area A1 is, for example, equal to or larger than 10 times as large as the area A2. Since the guide part 16 is provided in the flow channel 15, as the area A1 is larger than the area A2, the length of the guide part 16 in the circumferential direction R increases. Accordingly, the refrigerating machine oil 40 is easily separated from the refrigerant 110 flowing in the flow channels 15.

As illustrated in FIG. 5, supposing the spacing of the gap S2 is $t_3$, the spacing $t_3$ is larger than the spacing $t_2$ (see FIG. 4) of the gap D. That is, the spacing $t_3$ and the spacing $t_2$ satisfy Equation (1):

$$t_3 > t_2 \qquad\qquad (1)$$

Accordingly, the refrigerating machine oil 40 guided from the flow channel 15 to the gap D easily flows in the gap S2. Thus, the refrigerating machine oil 40 flows along the radially outward surfaces 12c and 12d of the permanent magnets 12a and 12b and consequently the permanent magnets 12a and 12b can be more easily cooled.

As illustrated in FIG. 6A, the flow channel 15 is formed between the magnet insertion hole 11b and the shaft insertion hole 11a in the rotor core 11. Specifically, the flow channel 15 is disposed closer to the magnet insertion hole 11b than the shaft insertion hole 11a. Accordingly, a thin portion 11g is formed between the magnet insertion hole 11b and the flow channel 15. The thin portion 11g extends in the circumferential direction R. Supposing the thickness of the thin portion 11g is $W_1$, the thickness $W_1$ is uniform in the circumferential direction R. The thickness $W_1$ is equal to or larger than the thickness $t_1$ of each electromagnetic steel sheet 13. Accordingly, a sufficient strength of the thin portion 11g is obtained.

Supposing the thickness of an iron core portion (hereinafter referred to as a "bridge portion 11h") between the flow channel 15 and the shaft insertion hole 11a is $W_2$, the thickness $W_2$ is larger than the thickness $W_1$. That is, the thickness $W_1$ and the thickness $W_2$ satisfy Equation (2):

$$W_1 \ < \ W_2 \tag{2}$$

Accordingly, the length of a portion of the gap D between the shaft insertion hole 11a and the flow channel 15 increases, and thus, a passage in which the refrigerant 110 flows in the gap D can be sufficiently obtained. In addition, since a sufficient thickness of the bridge portion 11h as an iron core portion around the shaft insertion hole 11a is obtained, when the crankshaft 3 is fixed to the shaft insertion hole 11a, a sufficient strength of the rotor core 11 is obtained.

<End Plate>

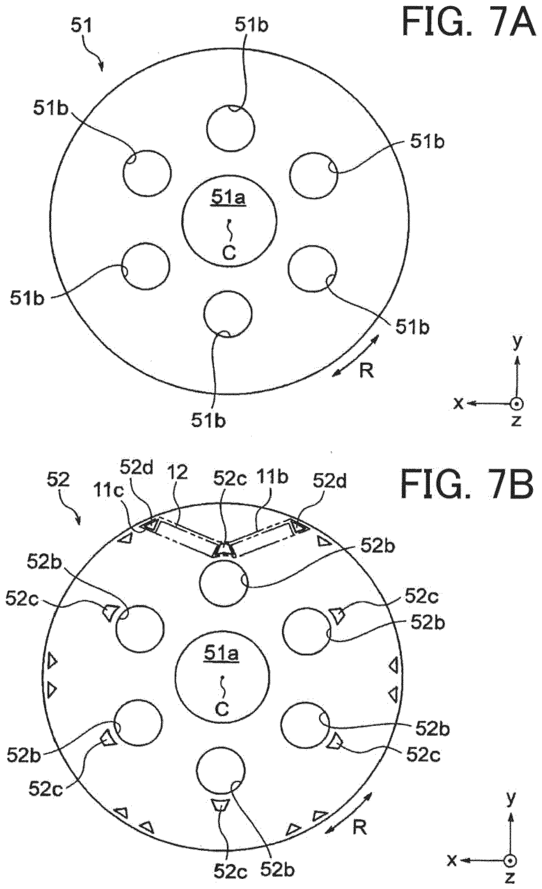

A configuration of an end plate of the rotor 10 will now be described with reference to FIGS. 4, 7A, and 7B. As illustrated in FIG. 4, the rotor 10 includes an upper end plate 51 as a first end plate and a lower end plate 52 as a second end plate. The upper end plate 51 is disposed on an end surface 11m at the +z-axis side as a first end surface of the rotor core 11. The lower end plate 52 is disposed on an end surface 11n at the -z-axis side as a second end surface of the rotor core 11. The rotor 10 may be implemented when the rotor 10 includes only one of the upper end plate 51 and the lower end plate 52.

FIG. 7A is a plan view illustrating a configuration of the upper end plate 51. As illustrated in FIGS. 4 and 7A, the upper end plate 51 is an annular plate about the axis C. The upper end plate 51 includes a shaft insertion hole 51a in which the crankshaft 3 is inserted and through holes 51b as first through holes communicating with the flow channels 15 of the rotor core 11. The refrigerant 110 that has passed through the flow channels 15 flows in the through holes 51b. Accordingly, the refrigerant 110 that has flowed in the flow channels 15 is easily guided to the discharge pipe 41 through the through holes 51b.

As illustrated in FIG. 4, the upper end plate 51 covers the magnet insertion holes 11b. In other words, the upper end plate 51 closes the magnet insertion holes 11b. Accordingly, it is possible to prevent the refrigerating machine oil 40 that has flowed in the magnet insertion holes 11b from flowing to the outside of the compressor 100 through the discharge pipe 41.

FIG. 7B is a plan view illustrating a configuration of the lower end plate 52. As illustrated in FIGS. 4 and 7B, the lower end plate 52 is an annular plate about the axis C. The lower end plate 52 includes a shaft insertion hole 52a in which the crankshaft 3 is inserted and through holes 52b as second through holes communicating with the flow channels 15.

The lower end plate 52 further includes a slits 52c as first slits communicating with the gaps S1 of the rotor core 11 and slits 52d as second slits communicating with the flux barriers 11c. The refrigerating machine oil 40 flows in the through holes 52b and the slits 52c and 52d. Since the oil sump (i.e., the bottom portion 4a of the sealed container 4) is provided at the -z-axis side of the lower end plate 52, the refrigerating machine oil 40 flows in the through holes 52b and the slits 52c and 52d to be thereby returned to the oil sump.

<Advantages of First Embodiment>

In the compressor 100 according to the first embodiment described above, the rotor core 11 of the electric motor 2 that drives the compression mechanism 1 includes the guide part 16 that guides the refrigerating machine oil 40 flowing in the flow channels 15 to the gap D when the rotor 10 rotates. Accordingly, the refrigerating machine oil 40 easily flows in the gap D between the plurality of electromagnetic steel sheets 13 constituting the rotor core 11, and thus the permanent magnets 12 can be easily cooled. In addition, since the refrigerating machine oil 40 easily flows in the gap D, the refrigerating machine oil 40 can easily return to the bottom portion 4a of the sealed container 4 as the oil sump. Accordingly, the compression mechanism 1 is easily lubricated by the refrigerating machine oil 40 and consequently poor lubrication in the compressor 100 can be prevented.

In a case where the refrigerant 110 is a refrigerant including ethylene-based fluorocarbon (R1123 in the first embodiment), the stroke volume of the compressor 100 decreases disadvantageously, and thus, the flow rate of the refrigerant 110 flowing in the flow channels 15 needs to be increased. However, when the flow rate of the refrigerant 110 flowing in the refrigerant 110 increases, the flow velocity of the refrigerant 110 increases, and thus, the refrigerant 110 and the refrigerating machine oil 40 are not easily separated from each other. In the first embodiment, since the rotor core 11 includes the guide part 16 described above, even if the refrigerant 110 is a refrigerant including ethylene-based fluorocarbon, the guide part 16 makes it easier to separate the refrigerating machine oil 40 from the refrigerant 110 and to guide to the gap D.

In the compressor 100 according to the first embodiment, the guide part 16 has the radially inward surface 17 defining the flow channel 15, and the radially inward surface 17 includes the slope portion 172 that inclines in a direction away from the axis C as approaching the end surface 13d of the electromagnetic steel sheets 13 at the +z-axis side. Accordingly, the refrigerating machine oil 40 flowing in the flow channels 15 can be easily guided to the gap D through the slope portion 172 when the rotor 10 rotates.

In the compressor 100 according to the first embodiment, the spacing $t_3$ of the gap S2 between the magnet insertion hole 11b and the surfaces 12c and 12d of the permanent magnet 12 facing in the radial direction is larger than the spacing $t_2$ of the gap D. Accordingly, the refrigerating machine oil 40 guided from the flow channels 15 to the gap D easily flows in the gap S2. Consequently, the permanent magnet 12 can be easily cooled by the refrigerating machine oil 40.

In the compressor 100 according to the first embodiment, the gap S2 is located radially outward from the permanent magnet 12. Since the refrigerating machine oil 40 guided to the gap D is subjected to the effect of a centrifugal force when the rotor 10 rotates, the refrigerating machine oil 40 easily flows in the gap D in a direction away from the axis C, that is, from the inside to the outside of the rotor core 11 in the radial direction. Thus, the gap S2 is present radially outward from the permanent magnets 12 and consequently the refrigerating machine oil 40 can easily flow to the gap S2 through the gap D. Accordingly, the permanent magnets 12 can be easily cooled by the refrigerating machine oil 40.

In the compressor 100 according to the first embodiment, the rotor 10 further includes the upper end plate 51 disposed at the end surface 11m of the rotor core 11 on a downstream side in the direction in which the refrigerant 110 flows, and the upper end plate 51 covers the magnet insertion holes 11b. Accordingly, it is possible to prevent the refrigerating machine oil 40 guided to the gap D by the guide part 16 from flowing to the outside of the compressor 100 through the discharge pipe 41 after having flowed from the magnet insertion holes 11b.

In the compressor 100 according to the first embodiment, the upper end plate 51 has the through hole 51b which communicates with the flow channels 15 and through which the refrigerant 110 flows. Accordingly, the refrigerant 110 that has flowed in the flow channels 15 easily flows to the outside of the compressor 100 through the discharge pipe 41 after having flowed from the through hole 51b.

In addition, in the compressor 100 according to the first embodiment, the rotor 10 further includes the lower end plate 52 disposed at the end surface 11n of the rotor core 11 at the upstream side in the direction in which the refrigerant 110 flows. The lower end plate 52 has the through hole 52b which communicates with the flow channels 15 and through which the refrigerating machine oil 40 flows. Accordingly, when the refrigerating machine oil 40 flowing in the flow channels 15 is subjected to the effect of the gravity, the refrigerating machine oil 40 easily returns to the bottom portion 4a of the sealed container 4 through the through hole 52b. Thus, the compression mechanism 1 is easily lubricated by the refrigerating machine oil 40 and consequently poor lubrication in the compressor 100 can be prevented.

In the compressor 100 according to the first embodiment, the lower end plate 52 further includes the slit 52c which communicates with the gap S1 and in which the refrigerating machine oil 40 flows. Accordingly, when the refrigerating machine oil 40 flowing in the gap S1 is subjected to the effect of the gravity, the refrigerating machine oil 40 easily returns to the bottom portion 4a of the sealed container 4 through the slit 52c. Thus, the compression mechanism 1 is easily lubricated by the refrigerating machine oil 40 and consequently poor lubrication in the compressor 100 can be prevented.

In the compressor 100 according to the first embodiment, the rotor core 11 further includes the flux barrier 11c present between the magnet insertion hole 11b and the end portion of the permanent magnet 12 in the circumferential direction. The lower end plate 52 further includes the slit 52d which communicates with the flux barrier 11c and in which the refrigerating machine oil 40 flows. Accordingly, when the refrigerating machine oil 40 flowing in the flux barrier 11c is subjected to the effect of the gravity, the refrigerating machine oil 40 can easily return to the bottom portion 4a of the sealed container 4 through the slit 52d. Thus, the compression mechanism 1 is easily lubricated by the refrigerating machine oil 40 and consequently poor lubrication in the compressor 100 can be prevented.

In the compressor 100 according to the first embodiment, the rotor core 11 includes the shaft insertion hole 11a in which the crankshaft 3 is inserted. The thickness $W_1$ of the thin portion 11g as an iron core portion between the magnet insertion hole 11b and the flow channel 15 in the rotor core 11 is smaller than the thickness $W_2$ of the bridge portion 11h as an iron core portion between the flow channel 15 and the shaft insertion hole 11a in the rotor core 11. Accordingly, the length of a portion of the gap D between the shaft insertion hole 11a and the flow channel 15 is large, and thus, a sufficient passage in which the refrigerant 110 flows in the gap D can be obtained. In addition, since a sufficient thickness of the bridge portion 11h is obtained, strength of the rotor 10 can be sufficiently ensured when the crankshaft 3 is fixed to the shaft insertion hole 11a.

<First Variation of First Embodiment>

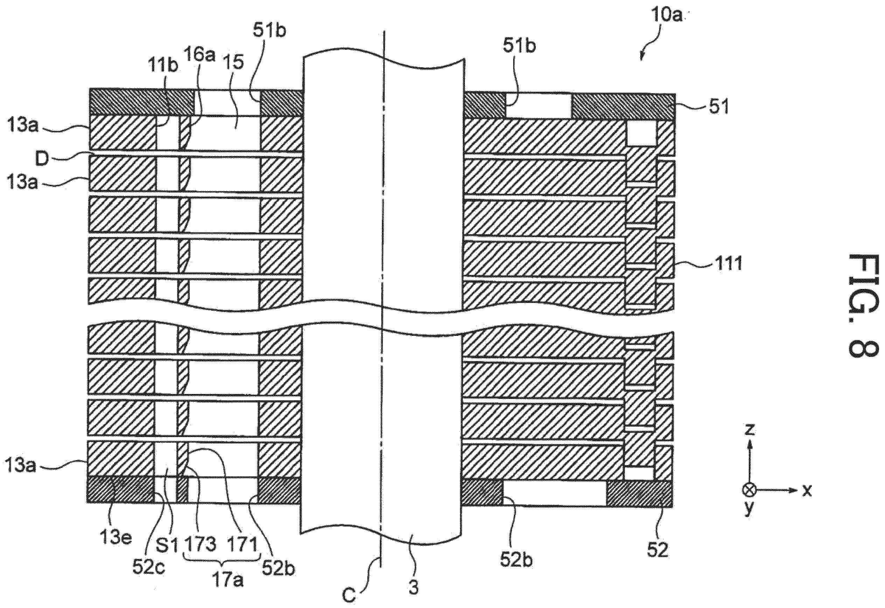

FIG. 8 is a cross-sectional view illustrating a configuration of a rotor 10a of an electric motor of a compressor according to a first variation of the first embodiment. In FIG. 8, the same reference characters as those in FIG. 4 designate the same or corresponding components as those illustrated in FIG. 4. The compressor according to the first variation of the first embodiment is different from the compressor 100 according to the first embodiment in the configuration of a guide part 16a. In other respects, the compressor according to the first variation of the first embodiment is the same as the compressor 100 according to the first embodiment. Thus, the following description will be made with reference to FIG. 1.

As illustrated in FIG. 8, the rotor 10a includes a rotor core 111. The rotor core 111 includes a plurality of electromagnetic steel sheets 13a laminated in the z-axis direction with a gap D in between. The rotor core 111 includes a flow channel 15 and a guide part 16a. The guide part 16a guides refrigerating machine oil 40 (see FIG. 1) flowing in the flow channels 15 to a gap D when the rotor 10a rotates.

The guide part 16a includes a radially inward surface 17a defining the flow channel 15. The radially inward surface 17a includes a vertical portion 171 and a slope portion 173 as a second slope portion. The slope portion 173 is disposed closer to the -z-axis side than the vertical portion 171. The slope portion 173 is a slope that inclines in a direction away from an axis C as approaching an end surface 13e at the -z-axis side as another end surface of the electromagnetic steel sheets 13a in the z-axis direction.

The refrigerating machine oil 40 flowing in the flow channels 15 is guided to the gap D through the slope portion 173. Accordingly, the refrigerating machine oil 40 easily flows in the gap D, and thus, the permanent magnet 12 is easily cooled. Since the refrigerating machine oil 40 easily flows in the gap D, the refrigerating machine oil 40 can easily return to a bottom portion 4a of a sealed container 4 (see FIG. 1). Thus, a compression mechanism 1 is easily lubricated by the refrigerating machine oil 40 and consequently poor lubrication in the compressor 100 can be prevented.

<Advantages of First Variation of First Embodiment>

In the compressor according to the first variation of the first embodiment described above, the radially inward surface 17a defining the flow channel 15 in the guide part 16a includes the slope portion 173 that inclines in the direction away from the axis C as approaching the end surface 13e of the electromagnetic steel sheets 13a at the -z-axis side. Accordingly, the refrigerating machine oil 40 easily flows in the gap D between the plurality of electromagnetic steel sheets 13a constituting the rotor core 111 and consequently the permanent magnets 12 can be easily cooled. Since the refrigerating machine oil 40 easily flows in the gap D, the refrigerating machine oil 40 can easily return to the bottom portion 4a of the sealed container 4. Thus, the compression mechanism 1 is easily lubricated by the refrigerating machine oil 40 and consequently poor lubrication in the compressor can be prevented.

<Second Variation of First Embodiment>

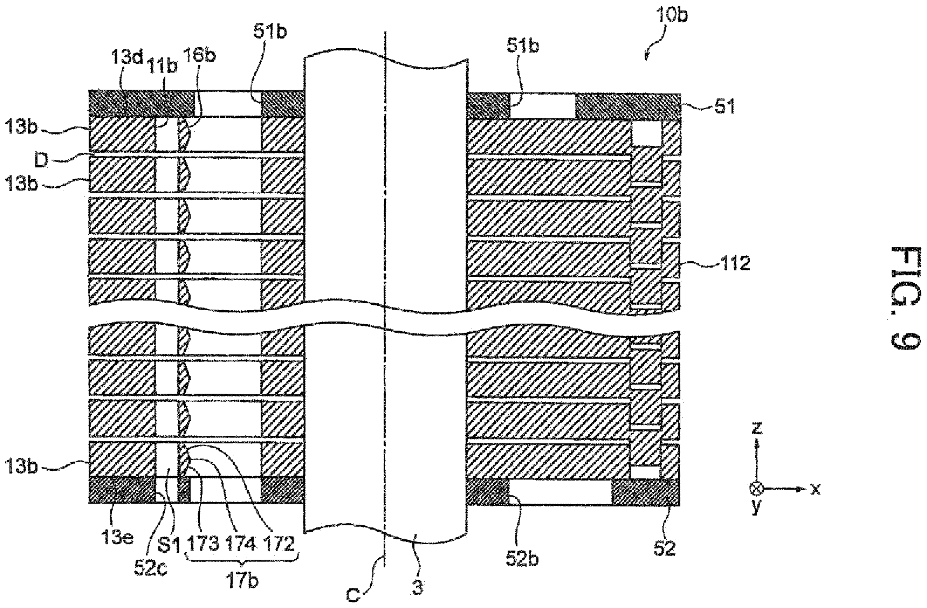

FIG. 9 is a cross-sectional view illustrating a configuration of a rotor 10b of an electric motor of a compressor according to a second variation of the first embodiment. In FIG. 9, the same reference characters as those in FIGS. 4 and 8 designate the same or corresponding components as those illustrated in FIGS. 4 and 8. The compressor according to the second variation of the first embodiment is different from the compressor 100 according to the first embodiment in the configuration of a guide part 16b. In other respects, the compressor according to the second variation of the first embodiment is the same as the compressor 100 according to the first embodiment. Thus, the following description will be made with reference to FIG. 1.

As illustrated in FIG. 9, the rotor 10b includes a rotor core 112. The rotor core 112 includes a plurality of electromagnetic steel sheets 13b laminated in the z-axis direction with a gap D in between. The rotor core 112 includes a flow channel 15 and a guide part 16b. The guide part 16b guides the refrigerating machine oil 40 flowing in the flow channels 15 to a gap D when the rotor 10b rotates.

The guide part 16b includes a radially inward surface 17b defining the flow channel 15. The radially inward surface 17b includes a slope portion 172 as a first slope portion, a slope portion 173 as a second slope portion, and a coupling portion 174 coupling the slope portion 172 and the slope portion 173 to each other. That is, in the second variation of the first embodiment, the guide part 16b includes two slope portions 172 and 173. Accordingly, refrigerating machine oil 40 flowing in the flow channels 15 is guided to the gap D through the slope portions 172 and 173. Accordingly, the refrigerating machine oil 40 more easily flows in the gap D, and thus, the permanent magnets 12 are more easily cooled. Since the refrigerating machine oil 40 is guided to the gap D through the slope portions 172 and 173, the refrigerating machine oil 40 can easily return to the bottom portion 4a of the sealed container' 4. Thus, the compression mechanism 1 is easily lubricated by the refrigerating machine oil 40 and consequently poor lubrication in the compressor can be prevented.

<Advantages of Second Variation of First Embodiment>

In the compressor according to the second variation of the first embodiment described above, the radially inward surface 17b defining the flow channel 15 in the guide part 16b includes the slope portion 172 and the slope portion 173. The slope portion 172 inclines in a direction away from the axis C as approaching the end surface 13d of the electromagnetic steel sheets 13b at the +z-axis side. The slope portion 173 inclines in a direction away from the axis C as approaching the end surface 13e of the electromagnetic steel sheets 13b at the -z-axis side. Accordingly, the refrigerating machine oil 40 more easily flows in the gap D between the plurality of electromagnetic steel sheets 13b constituting the rotor core 112 and consequently the permanent magnets 12 can be easily cooled. In addition, since the refrigerating machine oil 40 easily flows in the gap D, the refrigerating machine oil 40 can easily return to the bottom portion 4a of the sealed container 4 as an oil sump. Thus, the compression mechanism 1 is easily lubricated by the refrigerating machine oil 40 and consequently poor lubrication in the compressor can be prevented.

SECOND EMBODIMENT

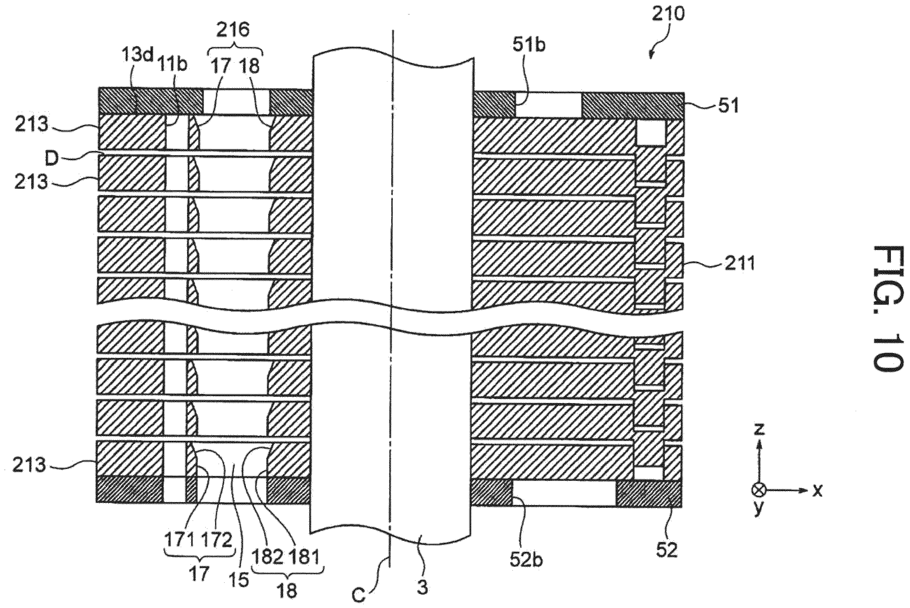

FIG. 10 is a cross-sectional view illustrating a configuration of a rotor 210 of an electric motor of a compressor according to a second embodiment. In FIG. 10, the same reference characters as those in FIG. 4 designate the same or corresponding components as those illustrated in FIG. 4. The compressor according to the second embodiment is different from the compressor 100 according to the first embodiment in the configuration of a guide part 216. In other respects, the compressor according to the second embodiment is the same as the compressor 100 according to the first embodiment. Thus, the following description will be made with reference to FIG. 1.

As illustrated in FIG. 10, the rotor 210 includes a rotor core 211. The rotor core 211 includes a plurality of electromagnetic steel sheets 213 laminated in the z-axis direction with a gap D in between. The rotor core 211 includes flow channel 15 and the guide part 216.

The guide part 216 guides refrigerating machine oil 40 flowing in the flow channels 15 to the gap D when the rotor 210 rotates. The guide part 216 includes a radially inward surface 17 defining the flow channel 15 and a radially outward surface 18 defining the flow channel 15.

The radially outward surface 18 of the guide part 216 includes a vertical portion 181 and a slope portion 182 as a third slope portion. The vertical portion 181 is a flat surface extending in parallel with the z-axis direction in the radially outward surface 18. The slope portion 182 is closer to the +z-axis side than the vertical portion 181. The slope portion 182 is a slope that inclines in a direction toward an axis C as approaching an end surface 13d of the electromagnetic steel sheets 213 at the +z-axis side. The slope portion 182 may be disposed closer to the -z-axis side than the vertical portion 181. In this case, the slope portion of the radially outward surface 18 may be a slope that inclines in a direction toward the axis C as approaching the end surface 13e of the electromagnetic steel sheets 213 at the -z-axis side. The radially outward surface 18 may include a plurality of slope portions at both sides of the vertical portion 181 in the z-axis direction. In the example illustrated in FIG. 10, the slope portion 182 is a flat surface, but may be a curved surface.

In the second embodiment, the refrigerating machine oil 40 flowing in the flow channels 15 is guided to the gap D through the slope portion 182 as well as the slope portion 172, when the rotor 210 rotates. Accordingly, the refrigerating machine oil 40 flowing in the flow channels 15 easily flows in the gap D. Thus, the permanent magnets 12 are easily cooled. In addition, the refrigerating machine oil 40 is easily guided to the gap D through the slope portions 172 and 182 and consequently the refrigerating machine oil 40 can easily return to the bottom portion 4a of the sealed container 4. Thus, the compression mechanism 1 is easily lubricated by the refrigerating machine oil 40 and consequently poor lubrication in the compressor can be prevented.

<Advantages of Second Embodiment>

In the compressor according to the second embodiment described above, the guide part 216 further includes the radially outward surface 18 defining the flow channel 15. The radially outward surface 18 includes the slope portion 182 that inclines in the direction toward the axis C as approaching the end surface 13d of the electromagnetic steel sheets 213. Accordingly, the refrigerating machine oil 40 easily flows in the gaps D between the plurality of electromagnetic steel sheets 213 constituting the rotor core 211 and consequently the permanent magnets 12 can be easily cooled. In addition, since the refrigerating machine oil 40 easily flows in the gaps D, the refrigerating machine oil 40 can easily return to the bottom portion 4a of the sealed container 4 as an oil sump. Thus, the compression mechanism 1 is easily lubricated by the refrigerating machine oil 40 and consequently poor lubrication in the compressor can be prevented.

<First Variation of Second Embodiment>

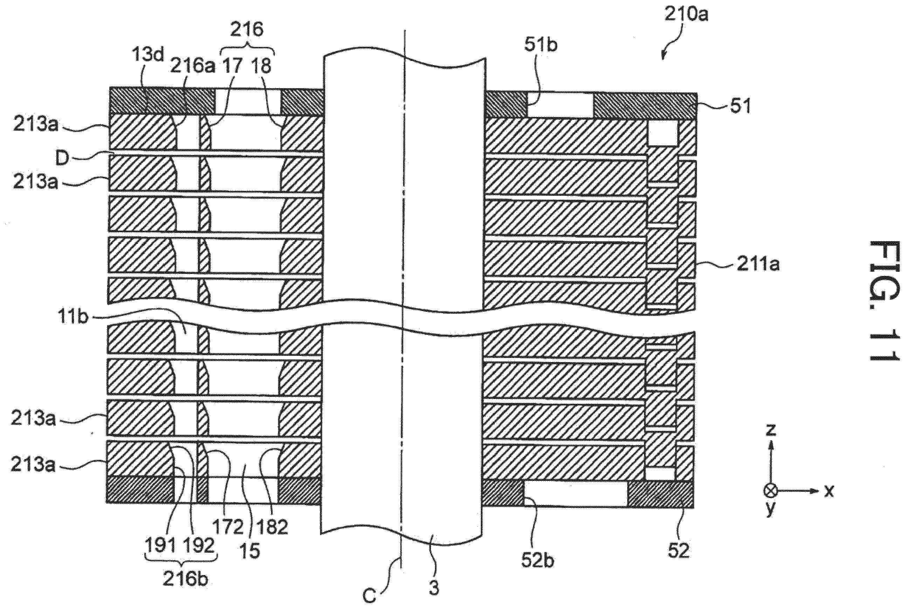

FIG. 11 is a cross-sectional view illustrating a configuration of a rotor 210a of an electric motor of a compressor according to a first variation of the second embodiment. In FIG. 11, the same reference characters as those in FIG. 10 designate the same or corresponding components as those illustrated in FIG. 10. The compressor according to the first variation of the second embodiment is different from the compressor according to the second embodiment in that the rotor 210a further includes the guide part 216a as a second guide part. In other respects, the compressor according to the first variation of the second embodiment is the same as the compressor according to the second embodiment.

As illustrated in FIG. 11, the rotor 210a includes a rotor core 211a. The rotor core 211a includes a plurality of electromagnetic steel sheets 213a laminated in the z-axis direction with a gap D in between. The rotor core 211a includes flow channel 15, a guide part 216 as a first guide part, and a guide part 216a as a second guide part.

The guide part 216a is included in the magnet insertion hole 11b. In this manner, in the first variation of the second embodiment, the guide part that guides the refrigerating machine oil 40 to the gap D when the rotor 210a rotates is included in the flow channel 15 and the magnet insertion hole 11b. Specifically, the guide part 216a guides the refrigerating machine oil 40 flowing in the magnet insertion holes 11b to the gap D when the rotor 210a rotates. Accordingly, the refrigerating machine oil 40 that has flowed in the magnet insertion holes 11b is guided to a portion of the gap D radially outward from the magnet insertion holes 11b, and thus, easily returns to the bottom portion 4a of the sealed container 4. Thus, the compression mechanism 1 is easily lubricated by the refrigerating machine oil 40 and consequently poor lubrication in the compressor can be prevented.

The guide part 216a includes the radially inward surface 216b defining the magnet insertion hole 11b. The radially inward surface 216b includes a vertical portion 191 and a slope portion 192. The vertical portion 191 is a plane extending in parallel with the z-axis direction in the radially inward surface 216b. The slope portion 192 is disposed closer to the +z-axis side than the vertical portion 191. The slope portion 192 is a slope that inclines in a direction away from an axis C (see FIG. 4) of the rotor 10 as approaching an end surface 13d of the electromagnetic steel sheets 213 at the +z-axis side. Accordingly, the refrigerating machine oil 40 flowing in the magnet insertion holes 11b is easily guided to the gap D through the slope portion 192. The slope portion 192 may be disposed closer to the -z-axis side than the vertical portion 191. In the example illustrated in FIG. 11, the slope portion 192 is a flat surface, but may be a curved surface.

<Advantages of First Variation of Second Embodiment>

In the compressor according to the first variation of the second embodiment, the rotor 210a of the electric motor includes the guide part 216a that guides the refrigerating machine oil 40 flowing in the magnet insertion holes 11b to the gap D during rotation. Accordingly, the refrigerating machine oil 40 that has flowed in the magnet insertion holes 11b is guided to a portion radially outward from the magnet insertion hole 11b in the gaps D between the plurality of electromagnetic steel sheets 13 constituting the rotor core 11, and thus, easily returns to the bottom portion 4a of the sealed container 4. Thus, the compression mechanism 1 is easily lubricated by the refrigerating machine oil 40 and consequently poor lubrication in the compressor can be prevented.

THIRD EMBODIMENT

A configuration of an air conditioner 300 according to a third embodiment will now be described. The third embodiment will be directed to an example of a case where a refrigeration cycle device is applied to the air conditioner 300. The refrigeration cycle device may be applied to another device such as a refrigerator or a heat pump cycle device.

FIG. 12 is a diagram illustrating a configuration of a refrigerant circuit in cooling operation of the air conditioner 300 according to the third embodiment. FIG. 13 is a diagram illustrating the configuration of the refrigerant circuit in heating operation of the air conditioner 300 according to the third embodiment. As illustrated in FIGS. 12 and 13, the air conditioner 300 includes the compressor 100, and a refrigerant flow channel 310 in which a refrigerant 110 compressed by the compressor 100 flows.

The refrigerant flow channel 310 includes an accumulator 101, a four-way valve 311 for switching between cooling operation and heating operation, an outdoor heat exchanger 312, an expansion valve 313 as a decompressor, an indoor heat exchanger 314, and a pipe (e.g., copper pipe) 315. The compressor 100, the accumulator 101, the outdoor heat exchanger 312, the expansion valve 313, and the indoor heat exchanger 314 are connected to one another by the pipe 315. In the manner described above, the compressor 100, the outdoor heat exchanger 312, the expansion valve 313, and the indoor heat exchanger 314 constitute the refrigerant circuit.

The air conditioner 300 further includes a control part 316. The control part 316 controls, for example, a pressure and a temperature in the compressor 100. The control part 316 is, for example, a microcomputer. The control part 316 may control other elements (e.g., four-way valve 311, etc.) constituting the refrigerant circuit.

Operation of the air conditioner 300 in cooling operation will now be described. As illustrated in FIG. 12, the compressor 100 compresses the refrigerant 110 sucked from the accumulator 101 and sends the refrigerant 110 as a high-temperature and high-pressure refrigerant gas. The four-way valve 311 causes the high-temperature and high-pressure refrigerant gas sent from the compressor 100 to flow in the outdoor heat exchanger 312. The outdoor heat exchanger 312 performs heat exchange between the high-temperature and high-pressure refrigerant gas and a medium (e.g., air) to thereby condense the refrigerant gas and send the resulting gas as a low-temperature and high-pressure liquid refrigerant. That is, in the cooling operation, the outdoor heat exchanger 312 functions as a condenser.

The expansion valve 313 expands the liquid refrigerant from the outdoor heat exchanger 312 and sends the resulting refrigerant as a low-temperature and low-pressure liquid refrigerant. Specifically, the low-temperature and high-pressure liquid refrigerant sent from the outdoor heat exchanger 312 is decompressed by the expansion valve 313 to thereby become a two-phase state of a low-temperature and low-pressure refrigerant gas and a low-temperature and low-pressure liquid refrigerant. The indoor heat exchanger 314 performs heat exchange between the refrigerant and in the two-phase state sent from the expansion valve 313 and the medium (e.g., air), evaporates the liquid refrigerant, and sends the refrigerant gas. That is, in the cooling operation, the indoor heat exchanger 314 functions as an evaporator. The refrigerant gas sent from the indoor heat exchanger 314 returns to the compressor 100 through the accumulator 101. In the manner described above, in the cooling operation, the refrigerant 110 circulates in the refrigerant circuit along a path indicted by arrows in FIG. 12. That is, in the cooling operation, the refrigerant 110 circulates in the order of the compressor 100, the outdoor heat exchanger 312, the expansion valve 313, and the indoor heat exchanger 314.

Switching between cooling operation and heating operation is performed by switching a flow channel with the four-way valve 311 illustrated in FIGS. 12 and 13. That is, in the heating operation, the indoor heat exchanger 314 functions as a condenser, and the outdoor heat exchanger 312 functions as an evaporator. In the heating operation, the refrigerant 110 circulates in the refrigerant circuit along a path indicated by arrows in FIG. 13.

In the air conditioner 300 according to the third embodiment described above, the air conditioner 300 includes the compressor 100 described in the first embodiment. As described above, in the compressor 100, poor lubrication in the compression mechanism 1 is prevented, and cooling effect of the permanent magnets 12 is enhanced. Accordingly, performance of the compressor 100 can be enhanced. As a result, performance of the air conditioner 300 can also be enhanced.

DESCRIPTION OF REFERENCE CHARACTERS

1 compression mechanism, 2 electric motor, 3 crankshaft, 4 sealed container, 10, 210, 210a rotor, 11, 111, 112, 211, 211a rotor core, 11a shaft insertion hole, 11b magnet insertion hole, 11c flux barrier, 11g thin portion, 11h bridge portion, 11m, 11n end surface, 12, 12a, 12b permanent magnet, 13, 13a, 13b, 213, 213a electromagnetic steel sheet, 13d, 13e end surface, 15 flow channel, 16, 16a, 16b, 216, 216a guide part, 17, 17a, 17b, 216b radially inward surface, 12c, 12d, 18 radially outward surface, 40 refrigerating machine oil, 51 upper end plate, 51b, 52b through hole, 52 lower end plate, 52c, 52d slit, 100 compressor, 110 refrigerant, 172, 172a, 173, 182, 192 slope portion, 300 air conditioner, 312 outdoor heat exchanger, 313 expansion valve, 314 indoor heat exchanger, C axis, D, S1, S2 gap, $t_2$, $t_3$ spacing, $W_1$, $W_2$ thickness.

**Claims**

1. A compressor comprising:

   a compression mechanism to compress a refrigerant;
   an electric motor to drive the compression mechanism; and
   a container to contain the compression mechanism, the electric motor, the refrigerant, and lubricating oil, wherein
   a rotor of the electric motor includes:

      a rotor core including a plurality of steel sheets laminated with a first gap in between; and a first permanent magnet inserted in a magnet insertion hole of the rotor core, and the rotor core includes:

      a flow channel which is located inward from the magnet insertion hole in a radial direction of the rotor core and through which the refrigerant and the lubricating oil flow; and
      a first guide part to guide the lubricating oil flowing through the flow channel to the first gap when the rotor rotates.

2. The compressor according to claim 1, wherein

   the rotor further includes a second permanent magnet inserted in the magnet insertion hole with a second gap disposed between the first permanent magnet and the second permanent magnet, and
   the lubricating oil guided in the first gap by the first guide part flows in the second gap.

3. The compressor according to claim 2, wherein the first guide part faces the second gap in the radial direction.

4. The compressor according to claim 2 or 3, wherein

   a third gap communicating with the second gap is present between the magnet insertion hole and a surface of each of the first permanent magnet and the second permanent magnet facing in the radial direction, and
   the lubricating oil flows in the third gap.

5. The compressor according to claim 4, wherein the third gap is present outward from the first permanent magnet and the second permanent magnet in the radial direction.

6. The compressor according to claim 4 or 5, wherein a spacing of the third gap is larger than a spacing of the first gap.

7. The compressor according to claim 5 or 6, wherein

   the rotor core further includes a flux barrier communicating with the third gap, the flux barrier being a gap between the magnet insertion hole and an end of each of the first permanent magnet and the second permanent magnet in a circumferential direction of the rotor, and
   the lubricating oil flows in the flux barrier.

8. The compressor according to any one of claims 1 to 7, wherein

   the first guide part has a surface facing inward in the radial direction and defining the flow channel, and
   the surface facing inward in the radial direction has a first slope portion inclining in a direction away from a rotation axis of the rotor as approaching an end surface of each of the plurality of steel sheets.

9. The compressor according to any one of claims 1 to 7, wherein

the first guide part has a surface facing inward in the radial direction and defining the flow channel, and
the surface facing inward in the radial direction includes:

a first slope portion inclining in a direction away from a rotation axis of the rotor as approaching one end surface of each of the plurality of steel sheets; and
a second slope portion inclining in a direction away from the rotation axis as approaching another end surface of each of the plurality of steel sheets.

10. The compressor according to claim 8 or 9, wherein

the first guide part further includes a surface facing outward in the radial direction and defining the flow channel, and
the surface facing outward in the radial direction includes a third slope portion inclining in a direction toward the rotation axis as approaching the end surface of each of the plurality of steel sheets.

11. The compressor according to any one of claims 1 to 10, wherein
the rotor core further includes a second guide part to guide the lubricating oil flowing in the magnet insertion hole to the first gap when the rotor rotates.

12. The compressor according to claim 1, wherein

the rotor further includes a first end plate located at a first end surface of the rotor core on a downstream side in a direction in which the refrigerant flows, and
the first end plate covers the magnet insertion hole.

13. The compressor according to claim 12, wherein
the first end plate has a first through hole which communicates with the flow channel and through which the refrigerant flows.

14. The compressor according to claim 7, wherein

the rotor further includes a second end plate located at a second end surface of the rotor core on an upstream side in a direction in which the refrigerant flows, and
the second end plate has a second through hole which communicates with the flow channel and through which the lubricating oil flows.

15. The compressor according to claim 14, wherein
the second end plate further includes a first slit which communicates with the second gap and through which the lubricating oil flows.

16. The compressor according to claim 14 or 15, wherein
the second end plate further includes a second slit which communicates with the flux barrier and through which the lubricating oil flows.

17. The compressor according to any one of claims 1 to 16, wherein
the rotor core further has a shaft insertion hole in which a rotation shaft of the rotor is inserted, and $W_1$ < $W_2$
where $W_1$ is a thickness of a portion of the rotor core between the magnet insertion hole and the flow channel and $W_2$ is a thickness of a portion of the rotor core between the flow channel and the shaft insertion hole.

18. The compressor according to any one of claims 1 to 17, wherein
the electric motor is located on a downstream side with respect to the compression mechanism in a direction in which the refrigerant flows.

19. The compressor according to any one of claims 1 to 18, wherein
the refrigerant contains ethylene-based fluorocarbon.

20. The compressor according to any one of claims 1 to 19, wherein
the refrigerant includes at least one of R1123 or R1132(E).

21. A refrigeration cycle device comprising:

the compressor according to any one of claims 1 to 20;
a condenser to condense the refrigerant sent from the compressor;
a decompressor to decompress the refrigerant condensed by the condenser; and
an evaporator to evaporate the refrigerant decompressed by the decompressor.

22. An air conditioner including the refrigeration cycle device according to claim 21.

# FIG. 1

# FIG. 2

# FIG. 3

FIG. 4

EP 4 253 758 A1

# FIG. 5

# FIG. 6A

# FIG. 6B

FIG. 7A

FIG. 7B

# FIG. 8

# FIG. 9

# FIG. 10

EP 4 253 758 A1

# FIG. 11

# FIG. 12

# FIG. 13

## INTERNATIONAL SEARCH REPORT

| | International application No. |
|---|---|
| | PCT/JP2020/044447 |

**A. CLASSIFICATION OF SUBJECT MATTER**
F04C 29/02(2006.01)i; F04B 39/00(2006.01)i; F04C 29/00(2006.01)i; H02K 1/32(2006.01)i
FI: F04C29/02 351A; F04C29/00 T; F04B39/00 106D; H02K1/32 Z
According to International Patent Classification (IPC) or to both national classification and IPC

**B. FIELDS SEARCHED**

Minimum documentation searched (classification system followed by classification symbols)
F04C29/02; F04B39/00; F04C29/00; H02K1/32

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2008/099871 A1 (DAIKIN INDUSTRIES, LTD.) 21 August 2008 (2008-08-21) paragraphs [0020]-[0038], fig. 1-4 | 1-22 |
| A | JP 2019-17230 A (MITSUBISHI ELECTRIC CORP.) 31 January 2019 (2019-01-31) paragraphs [0009]-[0017], fig. 1-5 | 1-22 |
| A | JP 2018-196302 A (MITSUBISHI ELECTRIC CORP.) 06 December 2018 (2018-12-06) paragraphs [0012]-[0035], fig. 1-11 | 1-22 |
| A | WO 2019/008722 A1 (MITSUBISHI ELECTRIC CORP.) 10 January 2019 (2019-01-10) paragraphs [0024], [0068]-[0075], fig. 3, 13 | 1-22 |

| ☐ | Further documents are listed in the continuation of Box C. | ☒ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 January 2021 (22.01.2021) | 02 February 2021 (02.02.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

| International application no. |
|---|
| PCT/JP2020/044447 |

| Patent Documents referred in the Report | Publication Date | Patent Family | Publication Date |
|---|---|---|---|
| WO 2008/099871 A1 | 21 Aug. 2008 | US 2010/0314955 A1 paragraphs [0090]-[0114], fig. 1-4 JP 2008-199843 A EP 2110926 A1 CN 101611526 A KR 10-2009-0105964 A | |
| JP 2019-17230 A | 31 Jan. 2019 | (Family: none) | |
| JP 2018-196302 A | 06 Dec. 2018 | (Family: none) | |
| WO 2019/008722 A1 | 10 Jan. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017072967 A